(19) **Europäisches Patentamt**
**European Patent Office**
**Office européen des brevets**

(11) **EP 1 649 655 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(51) Int Cl.:
**H04L 27/26** (2006.01)

(21) Anmeldenummer: **04763450.6**

(86) Internationale Anmeldenummer:
**PCT/EP2004/008277**

(22) Anmeldetag: **23.07.2004**

(87) Internationale Veröffentlichungsnummer:
**WO 2005/013575 (10.02.2005 Gazette 2005/06)**

(54) **GEWICHTUNGSSCHALTUNG FÜR EINEN MEHRTRÄGER-SIGNALEMPFÄNGER**

WEIGHTING CIRCUIT FOR A MULTI-CARRIER SIGNAL RECEIVER

CIRCUIT DE PONDERATION POUR RECEPTEUR DE SIGNAUX A PORTEUSES MULTIPLES

(84) Benannte Vertragsstaaten:
**DE FR GB**

(30) Priorität: **30.07.2003 DE 10334842**

(43) Veröffentlichungstag der Anmeldung:
**26.04.2006 Patentblatt 2006/17**

(73) Patentinhaber: **Infineon Technologies AG**
**81669 München (DE)**

(72) Erfinder:
• **FECHTEL, Stefan**
**85604 Zorneding (DE)**
• **MENKHOFF, Andreas**
**82041 Oberhaching (DE)**

(74) Vertreter: **Reinhard - Skuhra - Weise & Partner**
**Friedrichstrasse 31**
**80801 München (DE)**

(56) Entgegenhaltungen:
**US-A1- 2003 128 751      US-B1- 6 317 470**

EP 1 649 655 B1

**Beschreibung**

Die Erfindung betrifft eine Gewichtungsschaltung für einen Mehrträger-Signalempfänger, der zum Empfang eines aus Trägersignalen bestehenden Mehrträgersignals vorgesehen ist, insbesondere für einen OFDM-Empfänger.

Bei Mehrträger-Signalübertragung wird die Dateninformation auf mehreren Trägersignalen, die unterschiedliche Trägersignalfrequenzen aufweisen, übertragen. Bekannte Mehrträger-Empfangssysteme sind DMT und OFDM (orthogonal frequency division multiplexing). Insbesondere bei Mobilfunkübertragung kommt es zu einer Aufweitung bzw. gegenseitigen Überlappung von Datensymbolen. Wenn das Delay Spread des Datenübertragungskanals im Bereich der Datensymboldauer liegt, kann es zu einer starken Intersymbol-Interferenz kommen, die eine fehlerfreie Decodierung unmöglich macht, sofern nicht entsprechende Gegenmaßnahmen, wie beispielsweise Equalizer, eingesetzt werden. Bei Anwendung mit hohen Datenübertragungsraten sind derartige Kanalentzerrer jedoch sehr aufwendig. Durch Mehrträgerübertragung können diese Nachteile vermieden werden. Bei OFDM wird der zu übertragende Datenstrom in mehrere Teile aufgeteilt und parallel auf verschiedenen Signalträgern gesendet. Jeder Teilkanal kann seinerseits submoduliert werden. Die Datenübertragungsrate eines Trägers wird durch die Parallelisierung reduziert. Hierdurch wird die Intersymbol-Interferenz bei der Datenübertragung verringert. In dem OFDM-Empfänger erfolgt die Aufspaltung in die Unterkanäle bzw. Trägersignale. Nach Filterung, Abtastung und Demodulation werden die parallelen Daten wieder in einen seriellen Datenstrom zurückgewandelt.

Aus der Patentschrift US 2003/0128751 ist eine Gewichtungsschaltung für einen OFDM-Empfänger bekannt, bei der wenig verrauschte Träger stärker gewichtet werden.

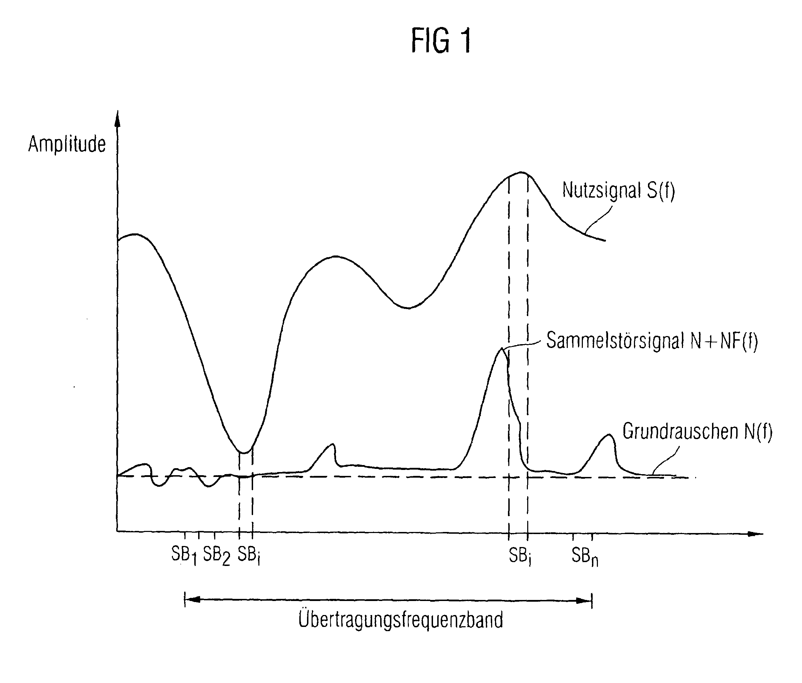

Fig. 1 zeigt ein Signalspektrum bei einer Mehrträgersignalübertragung. Die Daten werden in einem Übertragungsfrequenzband übertragen, welches eine Vielzahl von Subbändern $SB_i$ enthält. Die Subbänder $SB_i$ weisen in der Regel dieselbe Frequenzbandbreite $\Delta_f$ auf. Das Mehrträgersystem weist in manchen Fällen mehr als 1.000 Subbänder $SB_i$ auf. Bei der Übertragung über frequenzselektive Mehrwegekanäle können eine oder mehrere Dämpfungs-Maxima, d.h. Amplituden-Minima, in das Übertragungsband fallen. Dabei kann sich beispielsweise ein Subband $SB_i$ bei einem Dämpfungs-Maximum befinden, während ein anderes Subband $SB_i$ bei einem Dämpfungs-Minimum liegt. Die Amplituden der verschiedenen Subbänder SB sind daher sehr unterschiedlich. Nahe einem Dämpfungs-Maximum ist die Amplitude des Nutzsignals relativ klein. Wie in Fig. 1 dargestellt, weist das Subband $SB_i$ aufgrund seines sehr hohen Dämpfungsübertragungskanals eine sehr geringe Amplitude auf.

Neben dem Nutzsignal empfängt der Empfänger ein Grundrauschen $N_0$, welches im wesentlichen über das gesamte Übertragungsfrequenzband konstant ist, und externe Störsignale. Bei diesen externen Störsignalen kann es sich beispielsweise um Signale von anderen Signalquellen oder Fernsehsignale handeln. Die externen Störsignale NF überlagern sich dem Grundrauschen $N_0$ zu einem Summenstörsignal, wie in Fig. 1 dargestellt ist.

Das Empfangssignal des Empfängers setzt sich wie folgt zusammen:

$$E = N_0 + NF(f) + S(f) \qquad\qquad (1)$$

wobei $N_0$ ein weitgehend gleich verteiltes Grundrauschen,
NF(f) ein frequenzabhängiges Störsignal, und
S(f) das Nutzsignal darstellt.

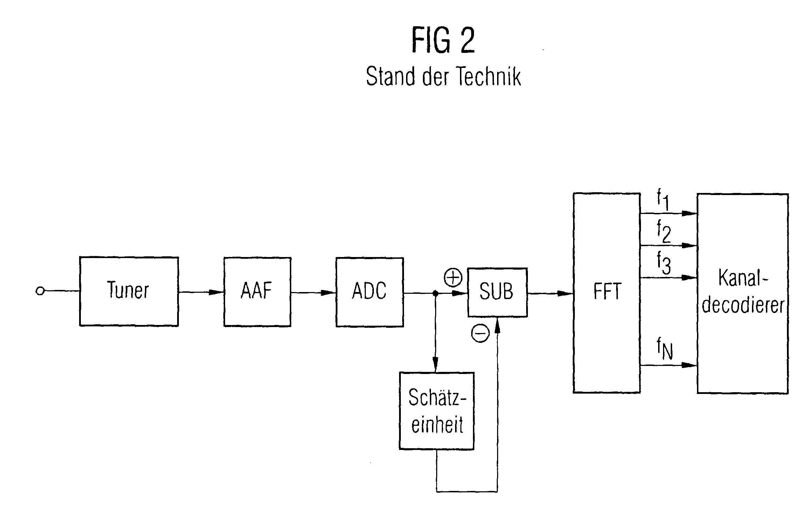

Fig. 2 zeigt einen Mehrträger-Signalempfänger nach dem Stand der Technik.

Der Empfänger enthält einen Tuner zur Abstimmung auf das Empfangssignal, einen nachgeschalteten Anti-Alias-Filter AAF und einen Analog-Digital-Wandler zur Umwandlung des empfangenen analogen Signals in ein digitales Empfangssignal. Am Ausgang des Analog-Digital-Wandlers wird das digitale Empfangssignal einerseits einer Subtrahierschaltung SUB und einer Schätzeinheit zugeführt. Die Schätzeinheit berechnet das Summenstörsignal. Das geschätzte Summenstörsignal wird von dem Eingangssignal E durch die Subtrahiereinheit SUB abgezogen, so dass im Idealfall nur noch ein ungestörtes Nutzsignal S übrig bleibt und weiterverarbeitet wird. Die Schätzeinheit gemäß Fig. 2 führt eine Kreuzkorrelation zwischen dem Ausgangssignal des ADC und einem oder mehreren zu erwartenden Störsignalen durch.

Bei einem OFDM-Empfänger nach dem Stand der Technik sind die Daten symbolweise aneinandergereiht und durch das Guard-Intervall voneinander getrennt. In der Regel tritt zwischen den Datensymbolen ein nicht bekannter Phasensprung auf. Demzufolge ermittelt die Schätzeinheit, um das Schätzsignal phasenrichtig zu subtrahieren, einen ersten Kreuzkorrelationswert zwischen dem Empfangssignal und einem zu erwartenden, gespeicherten Störsignal sowie einen zweiten Kreuzkorrelationswert zwischen dem Empfangssignal und dem um 90° phasenverschobenen zu erwartenden Störsignal. Anschließend wird basierend auf den Kreuzkorrelationswerten durch die Schätzeinheit die Phase des Störsignals berechnet. Die Berechnung dieser Phase ist stark fehleranfällig.

Ein Nachteil des herkömmlichen Mehrträger-Signalempfängers, wie er in Fig. 2 dargestellt ist, besteht darin, dass die Schätzung des Störsignals nach Betrag und Phase erfolgen muss und somit schwierig und fehleranfällig ist. Die Schätzung des Störsignals wird sehr ungenau, wenn die Varianz des Schätzergebnisses Messzeit relativ hoch ist, z. B. weil die zur Verfügung stehende Messzeit zu kurz ist.

Je größer die Abweichung des geschätzten Störsignals von dem tatsächlich auftretenden Störsignals ist, desto mehr steigt die Bit-Fehlerrate BFR des von dem Kanaldecodierer abgegebenen empfangenen Datenstroms an.

Es ist daher die Aufgabe der vorliegenden Erfindung, die Empfangsqualität eines Mehrträger-Signalempfängers zu erhöhen.

Diese Aufgabe wird erfindungsgemäß durch eine Gewichtungsschaltung für einen Mehrträger-Signalempfänger mit den im Patentanspruch 1 angegebenen Merkmalen gelöst.

Bevorzugte Ausführungsformen der erfindungsgemäßen Gewichtungsschaltung gemäß Anspruch 1 werden in den Ansprüchen 2-6 angegeben.

Weitere bevorzugte Ausführungsformen der erfindungsgemäßen Gewichtungsschaltung sowie weitere erfindungswesentliche Merkmale werden im weiteren unter Bezugnahme auf die beigefügten Figuren beschrieben.

Es zeigen:

Fig. 1    ein Signalspektrum eines Empfangssignals;

Fig. 2    einen Mehrträger-Signalempfänger nach dem Stand der Technik;

Fig. 3    einen Mehrträger-Signalempfänger, der eine erfindungsgemäße Gewichtungsschaltung gemäß einer ersten Ausführungsform enthält;

Fig. 4    einen Mehrträger-Signalempfänger, der eine erfindungsgemäße Gewichtungsschaltung gemäß einer zweiten Ausführungsform enthält;

Fig. 5    einen Mehrträger-Signalempfänger, der eine erfindungsgemäße Gewichtungsschaltung gemäß einer dritten Ausführungsform enthält;

Fig. 6    einen Mehrträger-Signalempfänger, der eine erfindungsgemäße Gewichtungsschaltung gemäß einer vierten Ausführungsform enthält.

Fig. 7    eine Tabelle des Speicherinhaltes eines programmierbaren Speichers bei der erfindungsgemäßen Gewichtungsschaltung;

Fig. 8    ein Ablaufdiagramm zur Erläuterung der Funktionsweise der erfindungsgemäßen Gewichtungsschaltung;

Fig. 9a    die Amplitudenverteilung eines Mehrträgersignals am Signaleingang einer erfindungsgemäßen Gewichtungsschaltung;

Fig. 9b    die Amplitudenverteilung des in Fig. 9a dargestellten Mehrträgersignals am Ausgang der erfindungsgemäßen Gewichtungsschaltung;

Fig. 10    ein Signalspektrum zur Erläuterung der Funktionsweise der erfindungsgemäßen Gewichtungsschaltung.

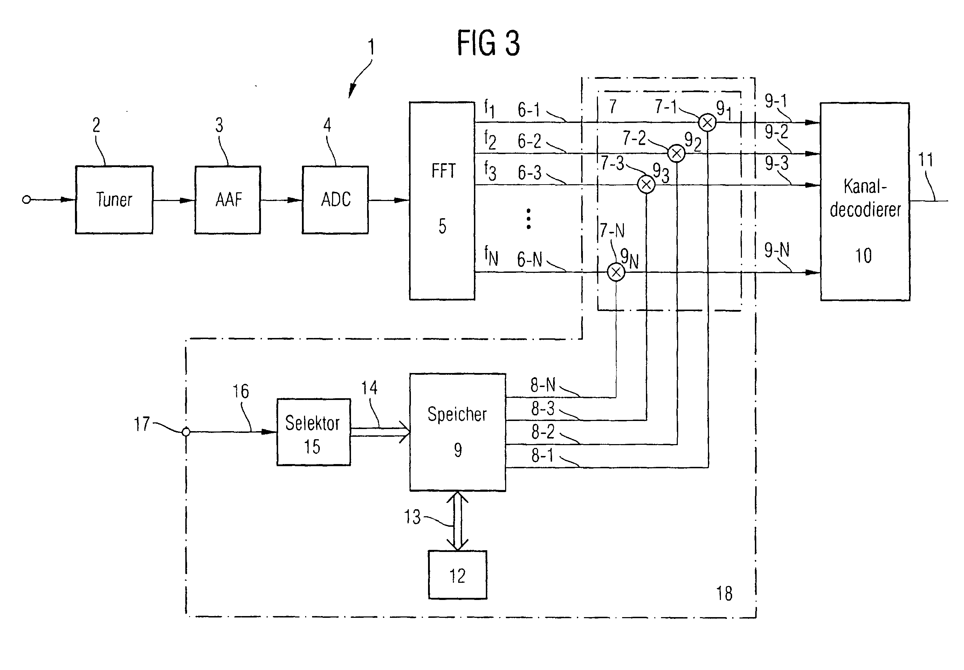

Fig. 3 zeigt einen Mehrträger-Signalempfänger 1, der eine erste Ausführungsform der erfindungsgemäßen Gewichtungsschaltung enthält. Der Mehrträger-Signalempfänger 1 enthält einen Tuner 2 zur Abstimmung auf das Empfangssignal, wobei dem Tuner 2 ein Anti-Alias-Filter 3 nachgeschaltet ist. Das gefilterte Empfangssignal wird durch einen Analog-Digital-Wandler 4 in ein digitales Empfangssignal umgewandelt und einer Berechnungsschaltung 5 zugeführt. Die Berechnungsschaltung 5 zerlegt das empfangene digitale Mehrträgersignal in verschiedene Trägersignale, die unterschiedliche Trägersignalfrequenzen $f_1$, $f_2$, $f_3$, ..., $f_N$ aufweisen. Die Berechnungsschaltung 5 ist vorzugsweise eine Filterbank, insbesondere Fast Fourier-Transformationsschaltung (FFT). Die Amplituden der Trägersignale werden über Leitungen 6-1, 6-2, 6-3, ..., 6-N einer Multiplizierschaltung 7 mit einer entsprechenden Anzahl von Multiplizierern 7-1, 7-2, 7-3, ..., 7-N zugeführt. Die Multiplizierer $7\text{-}i$ multiplizieren das jeweilige Trägersignal mit einem Gewichtungsfaktor $g_i$, der über eine zugehörige Leitung $8\text{-}i$ aus einem programmierbaren Speicher 9 ausgelesen wird. Die gewichteten Trägersignale werden über Leitungen $9\text{-}i$ einem Kanaldecodierer 10 zugeführt, der die gewichteten Trägersignale decodiert und zu einem digitalen Datenstrom zur weiteren Datenverarbeitung zusammensetzt. Der Kanaldecodierer 10 ist vorzugsweise ein Viterbi-Dekoder dem oft ein Reed-Solomon Dekoder nachgeschaltet ist. Der Kanaldecodierer 10 gibt den seriellen digitalen Datenstrom über eine Leitung 11 zur weiteren Datenverarbeitung ab.

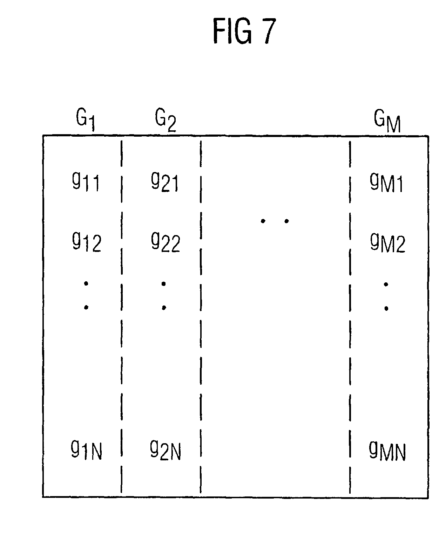

Der programmierbare Speicher 9 ist über eine Interface-Schaltung 12 extern programmierbar. Die Interface-Schaltung 12 ist über interne Datenleitungen 13 mit dem programmierbaren Speicher 9 verbunden. In dem programmierbaren Speicher 9 befinden sich mehrere Gewichtungskoeffizientensätze $G_i$, wie beispielsweise in Fig. 7 schematisch dargestellt ist. Jeder Gewichtungskoeffizientensatz $G_i$ enthält eine Vielzahl von Gewichtungskoeffizienten $g_i$, wobei die Anzahl N der Gewichtungskoeffizienten kleiner oder gleich der Anzahl der Subbänder SB innerhalb des Übertragungsfrequenzbandes entspricht. Die Anzahl N der verschiedenen Gewichtungskoeffizientensätze $G_i$ ist wählbar und beträgt beispielsweise acht. Der programmierbare Speicher 9 ist über Adressleitungen 14 mit einem Selektor 15 verbunden. Der Selektor 15 selektiert einen bestimmten Gewichtungskoeffizientensatz $G_i$ aus einer Mehrzahl von M-verschiedenen Gewichtungskoeffizientensätzen, die innerhalb des Speichers 9 abgespeichert sind. Dazu generiert der Selektor 15 eine Adresse zur Selektion des entsprechenden Gewichtungskoeffizientensatzes G.

Bei der in Fig. 3 dargestellten ersten Ausführungsform der erfindungsgemäßen Gewichtungsschaltung wird der Gewichtungskoeffizientensatz $G_i$ in Abhängigkeit von einer erwarteten Störsignalenergie selektiert, wobei bei der in Fig. 3 dargestellten ersten Ausführungsform die erwartete Störsignalenergie $EP_{Stör}$ extern über eine Leitung 16 eingestellt wird. Die Störsignalenergie ist proportional zum Quadrat der Amplitude des Summenstörsignals, welches sich aus dem Grundrauschen $N_0$ und externen Störsignalen zusammensetzt. Die erwartete Störsignalenergie $EP_{Stör}$ wird über einen Einstelleingang 17 angelegt. Die erste Ausführungsform der erfindungsgemäßen Gewichtungsschaltung 18 umfasst die Multiplizierschaltung 7 zur Multiplikation der Trägersignale mit den ausgewählten Gewichtungskoeffizienten, den programmierbaren Speicher 9 mit der zugehörigen Interface-Schaltung 12 sowie den Selektor 15 zur Selektion des Gewichtungskoeffizientensatzes.

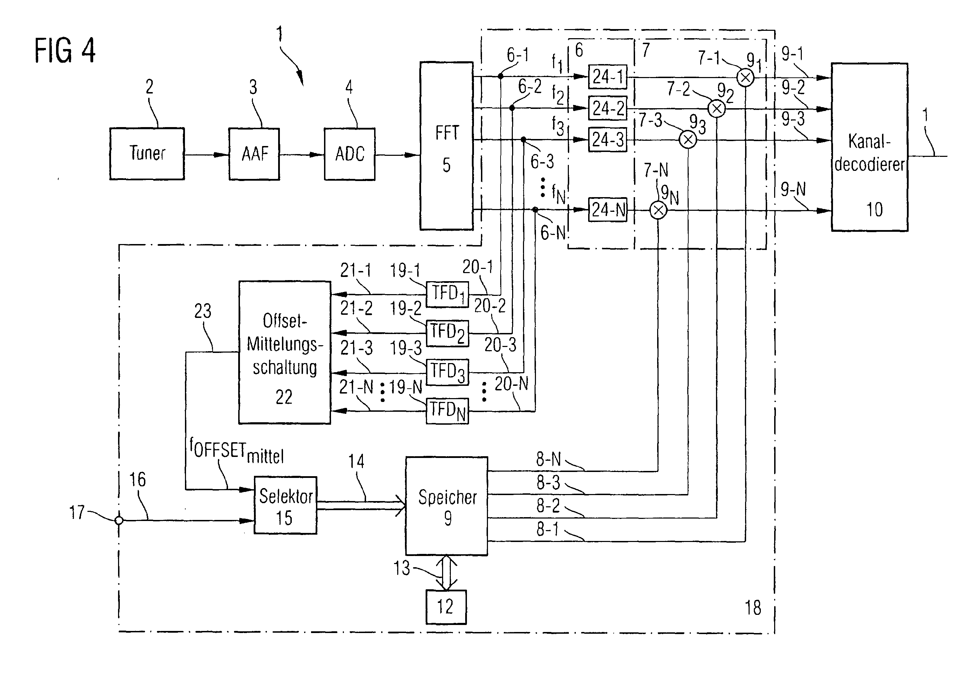

Fig. 4 zeigt einen Mehrträger-Signalempfänger 1, der eine zweite Ausführungsform der erfindungsgemäßen Gewichtungsschaltung 18 enthält. Entsprechende Bauteile sind mit entsprechenden Bezugszeichen versehen.

Bei der in Fig. 4 dargestellten zweiten Ausführungsform der erfindungsgemäßen Gewichtungsschaltung führt der Selektor 15 die Selektion des Gewichtungskoeffizientensatzes $G_i$ nicht nur in Abhängigkeit von der eingestellten Störsignalenergie $EP_{Stor}$, sondern auch in Abhängigkeit von einem gemittelten Frequenz-Offset durch. Die Gewichtungsschaltung 18 enthält hierzu zusätzlich Trägerfrequenzdetektoren 19-1, 19-2, ..., 19-N, die über Leitungen 20-1, 20-2, ..., 20-N mit den Ausgangsleitungen 6-1, 6-2, ..., 6-N verbunden sind. Die Trägerfrequenzdetektoren 19-$i$ ermitteln für jedes Trägersignal dessen tatsächliche Trägerfrequenz $f_i$ und geben die Abweichung bzw. den Offset $\Delta_{fi}$ zwischen der aktuellen bzw. tatsächlichen Trägerfrequenz $f_i$ und der Soll-Frequenz $f_{Soll}$ für dieses Trägersignal über eine zugehörige Ausgangsleitung 21-$i$ an eine Offset-Mittelungsschaltung 22 ab. Derartige Trägerfrequenzdetektoren 19-$i$ werden in "Digital Communications Receivers" von Heinrich Meyr, Stephan, A. Fechtel in John Wiley and Sons, 1998, Kapitel 8 (S. 445-504) beschrieben. Die Offset-Mittelungsschaltung 22 berechnet einen Mittelwert $f_{OFFSET-mittel}$ aller ermittelten Frequenz-Offsets der verschiedenen Trägersignale. Die Offset-Mittelungsschaltung 22 ist vorzugsweise ein Proportional-Integral-Berechnungselement. Die Mittelungszeit ist dabei vorzugsweise einstellbar.

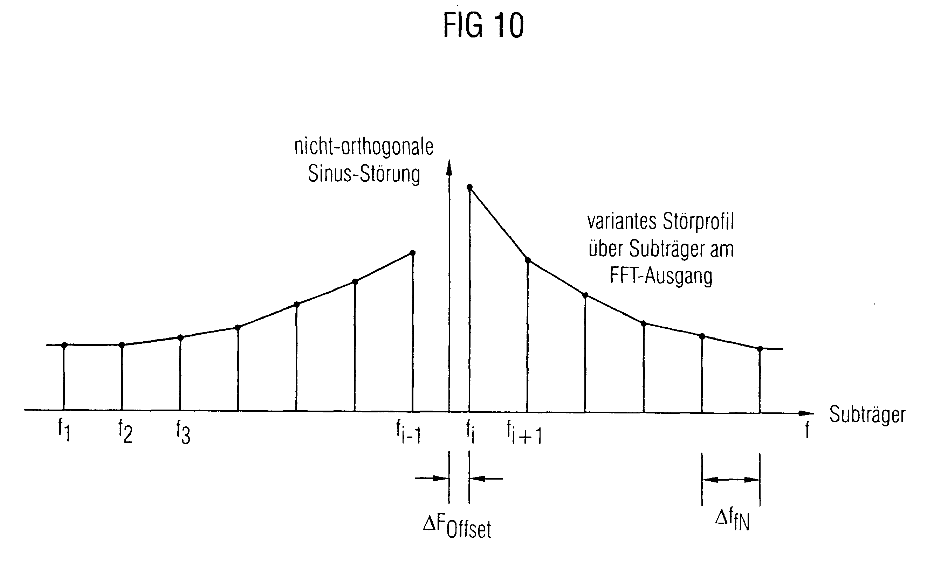

Fig. 10 zeigt das Spektrum eines OFDM-Empfangssignals mit einem sinusförmigen Störsignal. Das nichtorthogonale sinusförmige Störsignal liegt, wie in Fig. 10 erkennbar, außerhalb des Rasters des empfangenen OFDM-Signals, welches eine Vielzahl von Trägersignalen mit Trägerfrequenzen $f_i$ umfasst. Durch die Demodulation des OFDM-Signals mittels der Fast Fourier-Transformationsschaltung 5 wird die Energie des Störsignals auf die umliegenden Subträger bzw. Trägersignale verteilt, wobei die Dämpfung von dem Unterträger und von der Störfrequenz abhängt. Die an den Ausgangsleitungen 6-$i$ der Fast Fourier-Transformationsschaltung 5 auftretenden Störungen werden durch die erfindungsgemäße Gewichtungsschaltung 18 für eine festgelegte Anzahl von Trägersignalen derart abgesenkt, dass ein vorher bestimmter Rauschpegel eingestellt wird.

Der Energiepegel des Summenstörsignals, das sich aus einem externen Störsignal und dem Rauschen zusammensetzt, ergibt sich zu:

$$EP_{Stör} = 10 \cdot \log[10^{0,1*N_0} + 10^{0,1*NF}] \text{ in dB} \qquad (2)$$

wobei der Energiepegel des Summenstörsignals $EP_{stör}$ von dem externen Störsignal NF und dem Hintergrundrauschen $N_0$ abhängt.

Der Gewichtungskoeffizient $g_i$ wird in Abhängigkeit von der erwarteten Störsignalenergie $EP_{Stör}$ wie folgt berechnet:

$$g_i = 10^{-EP_{Stör}/20} \qquad (3)$$

wird beispielsweise das Rauschen auf null Dezibel normiert und ist das Störsignal nach der Fast Fourier-Transformation auf einem Subträger 10 dB stärker als das Rauschsignal, so beträgt die Gesamtenergie $EP_{Stör}$ von Störsignal und Rauschen gemäß Gleichung (2): $10 \cdot log[10^0 + 10^{0,1\ 10}] = 10,414\ d_B$.

Daraus berechnet sich der Gewichtungsfaktor $G_i$ zu $10^{(-10,414:20)} = 0,3015$.

Bei der Realisierung der erfindungsgemäßen Gewichtungsschaltung 18 wird ein Gewichtungssatz $G_i$, der aus geeignet dimensionierten Gewichtungskoeffizienten $g_i$ besteht, im voraus berechnet und in den Speicher 9 über die Interface-Schaltung 12 eingeschrieben. Die durch den Selektor 15 selektierten Gewichtungskoeffizienten werden durch die Multiplizierschaltung 7 mit den Trägersignalen multipliziert. Dabei können die Amplituden der verschiedenen Trägersignale, entweder wie in Fig. 4 dargestellt, vor der Multiplikation durch einen Zwischenspeicher 24, der verschiedene Latch-Bauelemente 24'i umfasst, zwischengespeichert oder die ausgelesenen Gewichtungskoeffizienten werden zur Multiplikation mit dem nächsten Block aus N-bestehenden Trägersignal-Amplituden, die von der FFT-Schaltung 5 abgegeben werden, eingesetzt.

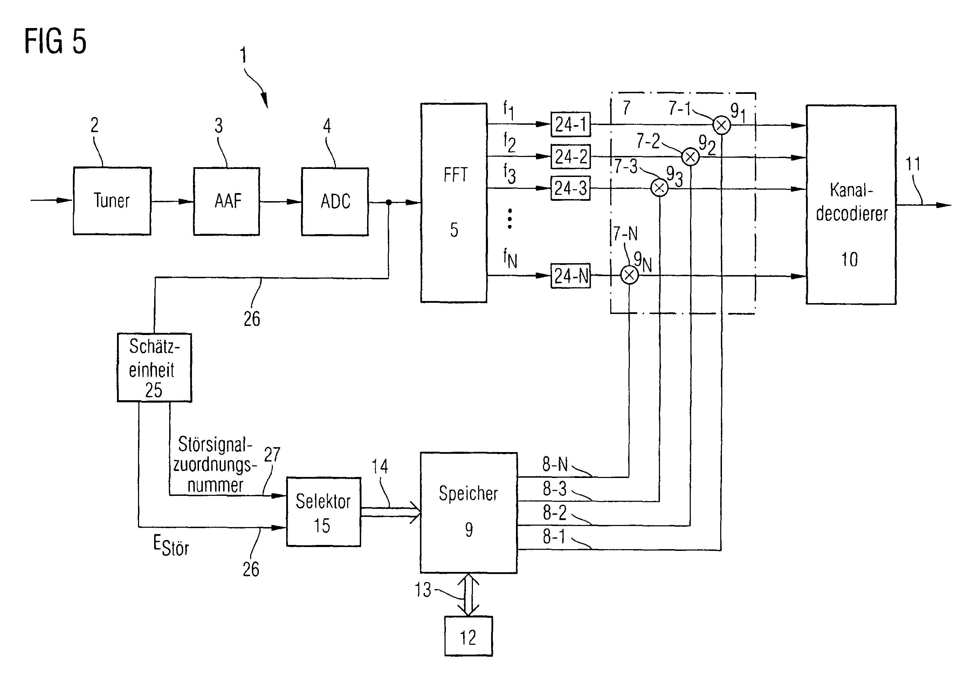

Fig. 5 zeigt eine dritte Ausführungsform der erfindungsgemäßen Gewichtungsschaltung 18.

Bei dieser Ausführungsform führt der Selektor 15 die Selektion des Gewichtungskoeffizientensatzes $G_i$ innerhalb des Speichers 9 nicht in Abhängigkeit von einer erwarteten extern eingestellten Störsignalenergie aus, sondern in Abhängigkeit von einer geschätzten Störsignalenergie, die durch eine Schätzeinheit 25 ermittelt wird. Die Schätzeinheit 25 ist über eine Leitung 26 hinter dem Analog-Digital-Wandler 4 angeschlossen und berechnet basierend auf dem empfangenen digitalen Mehrträgersignal einen maximalen Störsignalpegel. Die Schätzeinheit 25 führt eine erste Kreuzkorrelation zwischen dem an dem Ausgang des ADC 4 anliegenden Empfangssignal und mit mindestens einem zu erwartenden Störsignal zur Berechnung eines ersten Kreuzkorrelationswertes $k_1$ und eine zweite Kreuzkorrelation zwischen dem Empfangssignal und einem um 90° phasenverschobenen zu erwartenden Störsignal zur Berechnung eines zweiten Kreuzkorrelationswertes $k_2$ durch. Basierend auf den beiden Kreuzkorrelationswerten $k_1$, $k_2$ wird die Energie der aktuellen Störung des Empfangssignals durch die Schätzeinheit berechnet,

$$E_{Stör} \sim k_1{}^2 + k_2{}^2$$

In der Schätzeinheit 25 sind vorzugsweise mehrere zu erwartende Störsignale, beispielsweise zueinander frequenzverschobene Störsignale abgespeichert. Die zu erwartenden Störsignale sind alternativ in ihrer Signalform unterschiedlich, um so Störsignale von unterschiedlichen Signalquellen bzw. Signalverfälschungen nachzubilden. Die Schätzeinheit 25 gibt an den Selektor 15 die berechnete maximale Störsignalenergie $E_{Stör\ max}$ über eine Leitung 26 und die zugehörige Störsignalzuordnungsnummer über eine Leitung 27 ab, wobei die Störsignalzuordnungsnummer das zugehörige Störsignal angibt.

Der Selektor 15 selektiert in Abhängigkeit von der Störsignalzuordnungsnummer, die die Art des Störsignals bzw. diese Signalform angibt, und der berechneten Störsignalenergie einen Gewichtungskoeffizientensatz.

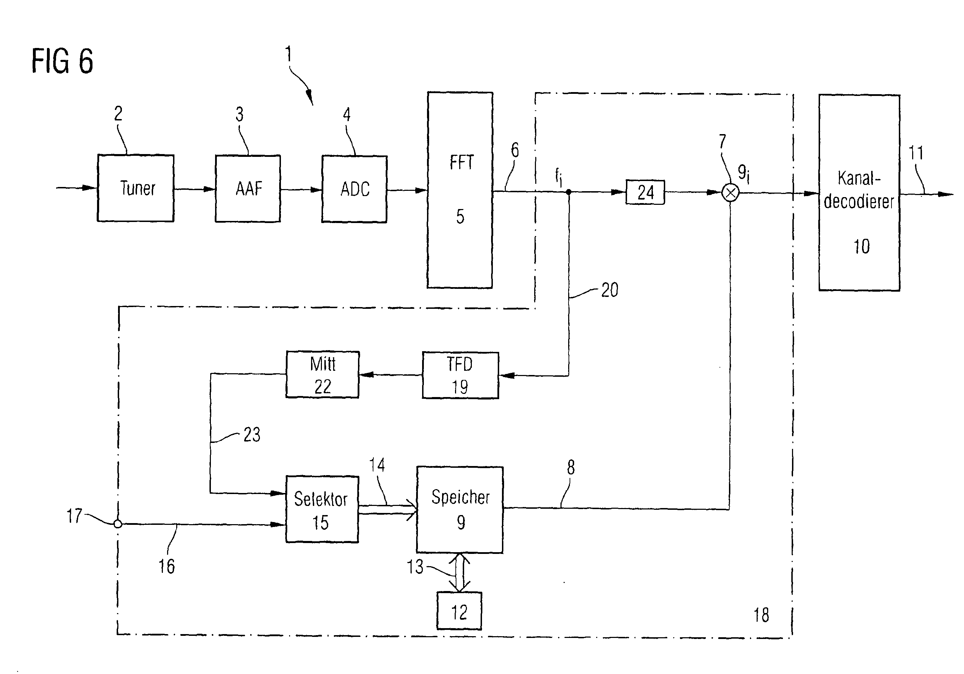

Fig. 6 zeigt eine weitere bevorzugte Ausführungsform der erfindungsgemäßen Gewichtungsschaltung 18 bei der die Daten seriell verarbeitet werden. Bei dieser bevorzugten Ausführungsform umfasst die Gewichtungsschaltung 18 lediglich einen Multiplizierer 7. Die von der Berechnungsschaltung 5 ermittelten Amplituden der verschiedenen Trägersignale werden bei der in Fig. 6 dargestellten Ausführungsform seriell ausgelesen und in dem Zwischenspeicher 24 zwischengespeichert. Ein Trägerfrequenzselektor 19 ermittelt die aktuelle Trägerfrequenz des Trägersignals und speichert die Abweichung von dem SollWert in einem Zwischenspeicher der Mittelungsschaltung 22 ab. Beträgt die Anzahl der Subbänder beispielsweise 1.024, werden in dem Zwischenspeicher 24 1.024 Amplituden der verschiedenen Trägersignale zwischengespeichert und in dem Zwischenspeicher der Mittelungsschaltung 22 werden 1.024 Sequenzabweichungen nacheinander eingeschrieben, die durch die Offset-Mittlungsschaltung 22 gemittelt werden. Dabei wird vorzugsweise ein rollender Mittelwert über die letzten 1024*K-Trägersignale berechnet. Bei einer bevorzugten Ausführungsform ist dabei die Anzahl K einstellbar. Die im Zwischenspeicher 24 zwischengespeicherten Amplituden der verschiedenen Trägersignale werden seriell ausgelesen und mit den ebenfalls seriell ausgelesenen zugehörigen Gewichtungskoeffizienten $G_i$ durch den Multiplizierer 7 gewichtet. Die in Fig. 6 dargestellte Ausführungsform der erfindungsgemäßen Gewichtungsschaltung 18 bietet den Vorteil, dass lediglich ein Multiplizierer 7 vorgesehen ist, so dass der schaltungstechnische Aufwand zur Realisierung der Gewichtungsschaltung 18 gering ist.

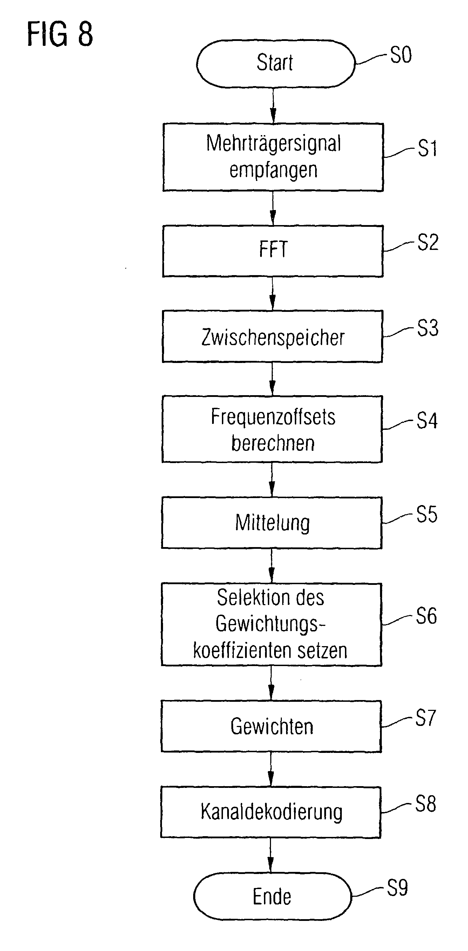

Fig. 8 ist ein Ablaufdiagramm zur Erläuterung der Funktionsweise der erfindungsgemäßen Gewichtungsschaltung.

Nach einem Start $S_0$ wird durch den Empfänger in einem Schritt $S_1$ das Mehrträgersignal empfangen und mittels des Tuners 2, des Anti-Alias-Filters 3 und des Analog-Digital-Wandlers 4 in ein digitales Trägersignal umgewandelt.

Die Berechnungsschaltung 5 zerlegt das Mehrträgersignal in einem Schritt $S_2$ in N-verschiedene Unterträger bzw. Trägersignale, die verschiedene Trägersignalfrequenzen $f_i$ aufweisen. Die Zerlegung erfolgt vorzugsweise mittels einer Fast Fourier-Transformation. Die Amplituden werden vorzugsweise in einem Schritt $S_3$ in einem Zwischenspeicher 24 zwischengespeichert. In einem weiteren Schritt $S_4$ ermittelt der Trägerfrequenzselektor 19 die Frequenz-Offsets der verschiedenen Trägersignale.

Bei einem weiteren Schritt $S_5$ berechnet die Offset-Mittlungsschaltung einen arithmetischen Mittelwert der von den Trägerfrequenzselektoren abgegebenen Frequenz-Offsets.

In einem Schritt $S_6$ selektiert der Selektor 15 in Abhängigkeit von der erwarteten Störsignalenergie und dem gemittelten Frequenz-Offset den geeigneten Gewichtungskoeffizientensatz $G_i$, der eine Vielzahl (N) von Gewichtungskoeffizienten $g_i$ umfasst. Der selektierte Gewichtungskoeffizientensatz $G_i$ wird im Schritt $S_7$ ausgelesen, wo bereits die Gewichtungskoeffizienten mittels der Multiplikatoren $7\text{-}i$ mit den jeweiligen Mehrträgersignalen zu deren Gewichtung multipliziert werden.

Anschließend erfolgt im Schritt $S_8$ eine Kanaldecodierung mittels des Kanaldecodierers 10.

Der Vorgang endet im Schritt $S_9$.

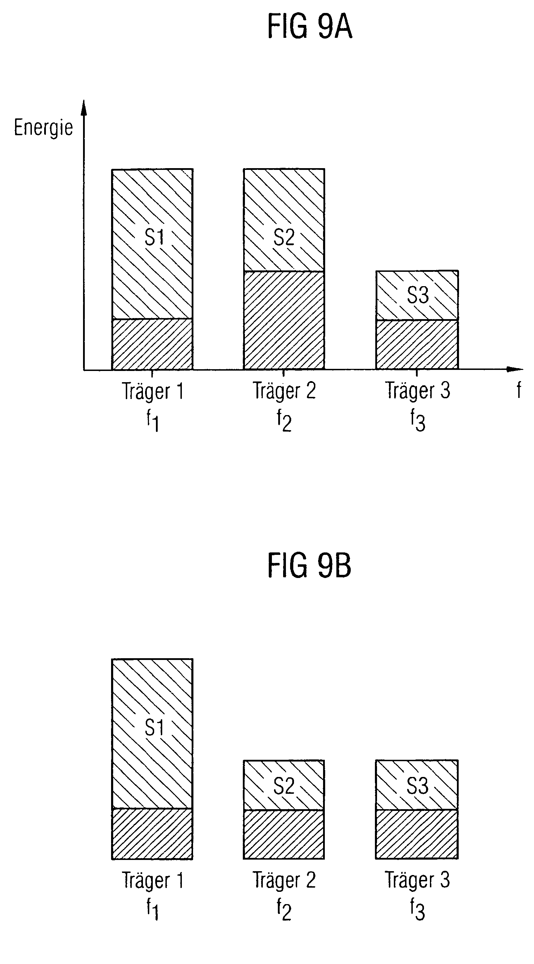

Fig. 9a zeigt beispielhaft drei Trägersignale mit unterschiedlichen Trägersignalfrequenzen $f_1$, $f_2$, $f_3$ an den Leitungen 6-1, 6-2, 6-3, die durch die erfindungsgemäße Gewichtungsschaltung 18 gewichtet werden. Die Energie der verschiedenen Trägersignale ist proportional zum Quadrat der Amplituden der Trägersignale. Bei dem in Fig. 9a dargestellten Beispiel weist das erste Trägersignal mit der Trägersignalfrequenz $f_1$ eine vergleichsweise hohe Nutzsignalenergie $S_1$ und eine geringe Störsignalenergie $N_1$ auf. Die Störsignalenergie $N_1$ setzt sich aus der Energie des Grundrauschens $N_0$ und externer Störsignale NF zusammen. Das zweite Mehrträgersignal bei der Trägersignalfrequenz $f_2$ weist bei dem dargestellten Beispiel die gleiche Gesamtenergie wie das erste Trägersignal auf, jedoch ist bei dem zweiten Trägersignal der Anteil der Störsignalenergie $N_2$ erheblich höher. Entsprechend ist die Signalenergie $S_2$ des zweiten Trägersignals geringer. Fig. 9a zeigt beispielhaft die Energie eines dritten Trägersignals, dessen Störsignalenergie genauso hoch ist wie die Störsignalenergie $N_1$ des ersten Trägersignals.

Fig. 9b zeigt die gewichteten Trägersignale an den Ausgangsleitungen $9\text{-}i$ der erfindungsgemäßen Gewichtungsschaltung 18. Durch die erfindungsgemäße Gewichtungsschaltung 18 werden die drei Trägersignale derart gewichtet, dass die Störsignalenergie $N_1$, des gewichteten ersten Trägersignals, die Störsignalenergie $N_2$, des zweiten gewichteten Trägersignals und die Störsignalenergie $N_3$, des dritten gewichteten Trägersignals gleich groß sind. Wie man aus Fig. 9b erkennen kann, wird das Trägersignal 2, welches einen relativ geringen Anteil der Nutzsignalenergie an der Gesamtsignalenergie aufweist, geringer gewichtet als das Trägersignal 1, bei dem das Verhältnis zwischen der Nutzsignalenergie $S_1$ und der Störsignalenergie $N_1$ wesentlich günstiger bzw. größer ist. Hat am Eingang der erfindungsgemäßen Gewichtungsschaltung 18 das Trägersignal 2 noch das gleiche Gewicht wie das Trägersignal 1, so erscheint am Ausgang der erfindungsgemäßen Gewichtungsschaltung 18 das Trägersignal 2 auf das Gewicht des Trägersignals 3 abgesenkt. Bei der erfindungsgemäßen Gewichtungsschaltung 18 wird das Trägersignal mit dem höheren Signal-/Rausch-Verhältnis SNR stärker gewichtet als Trägersignale mit einem geringeren Signal-/Rausch-Verhältnis SNR. Die gestörten Trägersignale bzw. Unterträger werden durch die erfindungsgemäße Gewichtungsschaltung als weniger zuverlässig bewertet als die schwach gestörten Trägersignale bzw. Unterträger. Durch die erfindungsgemäße Gewichtungsschaltung 18 wird das Ausgangsstörprofil über alle Unterträger hinweg geglättet. Aufgrund der erfindungsgemäßen Gewichtungsschaltung 18 sinkt die Bit-Fehlerrate BFR des Datenstroms am Ausgang des Kanaldecodierers 10 erheblich, so dass die Empfangsqualität des Empfängers 1 insgesamt stark verbessert wird.

Bezugszeichenliste

| | |
|---|---|
| 1 | Empfänger |
| 2 | Tuner |
| 3 | Anti-Alias-Filter |
| 4 | Analog-Digital-Wandler |
| 5 | Berechnungsschaltung |
| 6 | Leitungen |
| 7 | Multiplizierer |
| 8 | Leitungen |
| 9 | Speicher |
| 10 | Kanaldecodierer |
| 11 | Ausgangsleitung |
| 12 | Interface |
| 13 | Programmierleitungen |
| 14 | Adressleitungen |

15 Selektor
16 Einstellleitung
17 Einstelleingang
18 Gewichtungsschaltung
19 Trägerfrequenzdetektor
20 Leitung
21 Leitung
22 Offset-Mittlungsschaltung
23 Leitung
24 Zwischenspeicher
25 Schätzeinheit
26 Leitung
27 Leitung

**Patentansprüche**

1. Gewichtungsschaltung für einen Empfänger (1), der zum Empfang eines aus Trägersignalen bestehenden Mehrträgerempfangssignals vorgesehen ist, **dadurch gekennzeichnet, dass**

(a) die Gewichtungsschaltung (18) ein Trägersignal mit einem höheren Signal-/Rauschverhältnis (SNR) stärker gewichtet als ein Trägersignal mit einem geringeren Signal-/Rauschverhältnis (SNR),
(b) die Gewichtungsschaltung (18) einen Speicher (9), der mehrere Gewichtungskoeffizientensätze ($G_i$) speichert, und einen Selektor (15) aufweist, der einen der in dem Speicher (9) abgespeicherten Gewichtungskoeffizientensätze in Abhängigkeit von einer erwarteten Störsignalenergie des Empfangssignals selektiert, und
(c) die erwartete Störsignalenergie durch eine Schätzeinheit (25) mittels einer ersten Kreuzkorrelation zwischen dem Empfangssignal und einem zu erwartenden Störsignal und mittels einer zweiten Kreuzkorrelation zwischen dem Empfangssignal und einem um 90° phasenverschoben zu erwartenden Störsignal berechnet wird.

2. Gewichtungsschaltung nach Anspruch 1,
**dadurch gekennzeichnet,**
**dass** die Gewichtungsschaltung (18) mindestens einen Multiplizierer ($7_{-i}$) aufweist, der ein zugehöriges Trägersignal mit einem gespeicherten Gewichtungskoeffizienten ($g_i$) des selektierten Gewichtungskoeffizientensatzes multipliziert.

3. Gewichtungsschaltung nach Anspruch 1,
**dadurch gekennzeichnet,**
**dass** der Speicher (9) über ein Interface programmierbar ist.

4. Gewichtungsschaltung nach Anspruch 3,
**dadurch gekennzeichnet,**
**dass** das Mehrträgersignal durch eine Berechnungsschaltung (5) in die Trägersignale zerlegt wird.

5. Gewichtungsschaltung nach Anspruch 4,
**dadurch gekennzeichnet,**
**dass** die Berechnungsschaltung (5) eine Fast Fourier-Transformationsschaltung ist.

6. Gewichtungsschaltung nach Anspruch 5,
**dadurch gekennzeichnet,**
**dass** die durch die Berechnungsschaltung (5) zerlegten Trägersignale in einem Zwischenspeicher (24) zwischengespeichert werden.

**Claims**

1. Weighting circuit for a receiver (1) which is provided for reception of a multicarrier received signal composed of carrier signals, **characterized in that**

(a) the weighting circuit (18) weights a carrier signal with a higher signal-to-noise ratio (SNR) more strongly than a carrier signal with a lower signal-to-noise ratio (SNR),

(b) the weighting circuit (18) has a memory (9) which stores the plurality of weighting coefficient sets ($G_i$), and has a selector (15) which selects one of the weighting coefficient sets that are stored in the memory (9) as a function of an expected interference signal energy in the received signal, and

(c) the expected interference signal energy is calculated by an estimation unit (25) by means of a first cross-correlation between the received signal and an interference signal to be expected, and by means of a second cross-correlation between the received signal and an interference signal to be expected, phase-shifted through 90°.

2. Weighting circuit according to Claim 1,
**characterized**
**in that** the weighting circuit (18) has at least one multiplier ($7_{-i}$) which multiplies an associated carrier signal by a stored weighting coefficient ($g_i$) from the selected weighting coefficient set.

3. Weighting circuit according to Claim 1,
**characterized**
**in that** the memory (9) is programmable via an interface.

4. Weighting circuit according to Claim 3,
**characterized**
**in that** the multicarrier signal is broken down into the carrier signals by means of a calculation circuit (5).

5. Weighting circuit according to Claim 4,
**characterized**
**in that** the calculation circuit (5) is a Fast Fourier Transformation circuit.

6. Weighting circuit according to Claim 5,
**characterized**
**in that** the carrier signals which have been broken down by the calculation circuit (5) are temporarily stored in a buffer store (24).

**Revendications**

1. Circuit de pondération pour un récepteur (1) qui est prévu pour la réception d'un signal reçu à porteuses multiples constitué de signaux porteurs, **caractérisé par le fait que**

(a) le circuit de pondération (18) pondère un signal porteur ayant un plus grand rapport signal / bruit (SNR) plus fortement qu'un signal porteur ayant un plus petit rapport signal / bruit (SNR),

(b) le circuit de pondération (18) comporte une mémoire (9) qui mémorise plusieurs ensembles de coefficients de pondération ($G_i$) et un sélecteur (15) qui sélectionne l'un des ensembles de coefficients de pondération mémorisés dans la mémoire (9) en fonction d'une énergie de signal parasite escomptée, et

(c) l'énergie de signal parasite escomptée est calculée par une unité d'estimation (25) au moyen d'une première intercorrélation entre le signal reçu et un signal parasite escompté et au moyen d'une deuxième intercorrélation entre le signal reçu et un signal parasite escompté déphasé de 90°.

2. Circuit de pondération selon la revendication 1,
**caractérisé par le fait que** le circuit de pondération (18) comporte au moins un multiplicateur ($7_{-i}$) qui multiplie un signal porteur associé par un coefficient de pondération mémorisé ($g_i$) de l'ensemble de coefficients de pondération sélectionné.

3. Circuit de pondération selon la revendication 1,
**caractérisé par le fait que** la mémoire (9) est programmable par l'intermédiaire d'une interface.

4. Circuit de pondération selon la revendication 3,
**caractérisé par le fait que** le signal à porteuses multiples est décomposé en signaux porteurs par un circuit de calcul (5).

**5.** Circuit de pondération selon la revendication 4,
**caractérisé par le fait que** le circuit de calcul (5) est un circuit de transformation de Fourier rapide.

**6.** Circuit de pondération selon la revendication 5,
**caractérisé par le fait que** les signaux porteurs décomposés par le circuit de calcul (5) sont mémorisés temporairement dans une mémoire intermédiaire (24).

# FIG 1

Amplitude

Nutzsignal S(f)

Sammelstörsignal N+NF(f)

Grundrauschen N(f)

$SB_1$ $SB_2$ $SB_i$      $SB_j$   $SB_n$

Übertragungsfrequenzband

EP 1 649 655 B1

## FIG 2

Stand der Technik

EP 1 649 655 B1

FIG 3

EP 1 649 655 B1

FIG 4

# FIG 5

# FIG 6

EP 1 649 655 B1

FIG 7

**FIG 8**

```
        ┌──────────────┐
        │    Start     │──── S0
        └──────────────┘
               │
               ▼
     ┌────────────────────┐
     │  Mehrträgersignal  │──── S1
     │     empfangen      │
     └────────────────────┘
               │
               ▼
     ┌────────────────────┐
     │        FFT         │──── S2
     └────────────────────┘
               │
               ▼
     ┌────────────────────┐
     │  Zwischenspeicher  │──── S3
     └────────────────────┘
               │
               ▼
     ┌────────────────────┐
     │   Frequenzoffsets  │──── S4
     │     berechnen      │
     └────────────────────┘
               │
               ▼
     ┌────────────────────┐
     │     Mittelung      │──── S5
     └────────────────────┘
               │
               ▼
     ┌────────────────────┐
     │   Selektion des    │
     │   Gewichtungs-     │──── S6
     │ koeffizienten setzen│
     └────────────────────┘
               │
               ▼
     ┌────────────────────┐
     │     Gewichten      │──── S7
     └────────────────────┘
               │
               ▼
     ┌────────────────────┐
     │  Kanaldekodierung  │──── S8
     └────────────────────┘
               │
               ▼
        ┌──────────────┐
        │     Ende     │──── S9
        └──────────────┘
```

## FIG 9A

## FIG 9B

# FIG 10

nicht-orthogonale
Sinus-Störung

variantes Störprofil
über Subträger am
FFT-Ausgang

$f_1$    $f_2$    $f_3$              $f_{i-1}$   $f_i$   $f_{i+1}$                               f    Subträger

$\Delta F_{Offset}$

$\Delta f_{fN}$

EP 1 649 655 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 20030128751 A

**In der Beschreibung aufgeführte Nicht-Patentliteratur**

• **VON HEINRICH MEYR ; STEPHAN, A. FECHTEL.** Digital Communications Receivers. John Wiley and Sons, 1998, 445-504